# NEUE EUROPÄISCHE PATENTSCHRIFT

(11) **EP 1 262 614 B2**
(45) Veröffentlichungstag und Bekanntmachung des Hinweises auf die Entscheidung über den Einspruch: **18.03.2015**
(45) Hinweis auf die Patenterteilung: 10.09.2008
(21) Anmeldenummer: 02011704.0
(22) Anmeldetag: 25.05.2002
(51) Int. Cl.: E04H 12/16, F03D 11/04

(54) **Windkraftanlage**
Wind power plant
Éolienne

(30) Priorität: 01.06.2001 DE 10126912
(43) Veröffentlichungstag der Anmeldung: 04.12.2002
(73) Patentinhaber: Heijmans Oevermann GmbH, 48153 Münster (DE)
(72) Erfinder: Kopatschek, Hubertus, 48151 Münster (DE); Funke, Günther, 48165 Münster (DE)
(74) Vertreter: Prinz & Partner mbB

(56) Entgegenhaltungen:
- DE-B- 2 249 198
- DE-C- 835 520
- DE-U- 29 901 670
- GB-A- 638 089
- GB-A- 1 105 133

## Beschreibung

Die Erfindung betrifft eine Windkraftanlage mit einem Turmbauwerk aus Spannbeton nach dem Oberbegriff des Anspruchs 1.

Türme aus Spannbeton sind grundsätzlich bekannt. Wenigstens ein Turmabschnitt ist dabei aus einer ringförmigen Wandung aus Beton gebildet. Die Betonwandung kann entweder durch Anordnung mehrerer vorgefertigter Betonringe übereinander zusammengesetzt werden oder durch eine Ringschalung, die mit Beton ausgefüllt wird. Über die Höhe des Turmabschnitts sind Spannkanäle in die Betonwandung eingearbeitet, in die Spannglieder eingezogen sind. Diese Spannglieder sind an der Turmkrone verankert und unterhalb der Turmwandung an einem Fundament verankert. Die Spannglieder werden beim Bau des Turms mit einer Vorspannung beaufschlagt. Durch die Vorspannung wird erreicht, dass in allen Lastfällen des Turmes die zwischen Turmkrone und Fundament befindliche Betonwandung ausschließlich auf Druck beansprucht wird, wodurch die besondere Eignung des Betons zur Aufnahme von Drucklasten ausgenutzt wird und einer Rißbildung im Beton durch zu hohe Zugkräfte entgegengewirkt wird. Die Spannkanäle mit den innenliegenden Spanngliedern werden nach dem Vorspannen mit einer Zementinjektion gefüllt, so dass sich eine innige Verbindung jedes Spannglieds mit dem Spannkanal in der Turmwandung ergibt.

Nachteilig bei den bekannten Turmbauwerken aus Spannbeton ist, dass bei einer üblichen Fertigungsweise die Turmwandung in mehreren Abschnitten hergestellt wird und dabei die Spannkanäle in jedem neu hinzuzufügenden Segment so angeordnet sein müssen, dass sie bündig mit den unterhalb liegenden Spannkanälen in dem bereits erstellten Turmwandungsabschnitt sind. Die entsprechenden Schalungen müssen dazu mit genau justierten Leerrohren versehen sein, die beim Ausgießen der Schalung mit Beton umhüllt werden. Insgesamt ergibt sich ein erhöhter Fertigungsaufwand für ein Turmbauwerk aus Spannbeton, bei dem Spannkanäle in der Wandung zur späteren Aufnahme von Spanngliedern vorgesehen sind.

Das Ausfüllen der Hohlräume in den Spannkanälen mit den innenliegenden Spanngliedern ist, insbesondere bei großen Spannkanallängen bei großen Turmhöhen und/oder wegen der geringen Spannkanalquerschnitte, schwierig. Eine zuverlässige Kontrolle der Verfüllung des Spannkanals über dessen Länge hinweg ist nicht möglich. An den Stellen, wo die Spannglieder nicht von einer Zementinjektion umhüllt sind, können später Korrosionsschäden entstehen; Lunker im Injektionsmaterial in den Spannkanälen können jedoch nicht festgestellt werden. Korrosion bewirkt ein Versagen der Spannglieder und beeinträchtigt die Gebrauchsfähigkeit des Turmes.

Ein Nachspannen der Spannglieder ist ebensowenig möglich wie ein Austausch von Spanngliedern im Schadensfall. Beim Rückbau eines Turmbauwerkes aus Spannbeton sind erhöhte Aufwendungen erforderlich, um die einbetonierten Spannglieder zu beseitigen.

Aus der GB 11 051 33 ist ein Turmbauwerk bekannt, bei dem ringförmige Segmente übereinandergeschichtet werden und massive Spannglieder vorgesehen sind, um diese zusammen zu halten. Es handelt sich nicht um ein Spannbeton-Bauwerk, sondern um ein säulenartiges Gebilde wie z.B. ein Silo eines aus beliebigen Materialien, darunter auch Kunststoff-Blasformteilen. Die Spannglieder erstrecken sich gerade zwischen Fußlager und Kopflager und können einer gekrümmten Kontur nicht folgen.

Die DE 835 520 offenbart ein Bauwerk aus Spannbeton, wobei es sich jedoch um einen einfachen Mast mit geringer Weite und nur einem Spannglied handelt, welches auf der Mittelachse verläuft. Abgesehen davon, dass für Türme am Umfang mehrere Spannglieder vorhanden sein müssen, würde die zentrale Anordnung auch Einbauten im Turminneren wie Treppen, Fahrstühle und Zwischengeschosse massiv behindern.

Ein Nachspannen der Spannglieder ist ebensowenig möglich wie ein Austausch von Spanngliedern im Schadensfall. Beim Rückbau eines Turmbauwerkes aus Spannbeton sind erhöhte Aufwendungen erforderlich, um die einbetonierten Spannglieder zu beseitigen.

Es stellt sich daher die Aufgabe, ein Turmbauwerk der eingangs genannten Art so weiter zu entwickeln, dass die Fertigung der Turmwandung vereinfacht ist, dass der Korrosion der Spannglieder entgegen gewirkt wird und damit die Dauerhaftigkeit des Turms erhöht ist. Auch soll der Rückbau des Turmbauwerks erleichtert sein.

Diese Aufgaben werden durch die kennzeichnenden Merkmale des Anspruchs 1 gelöst. Die Anordnung der Spannglieder im Hohlraum im Inneren der ringförmigen Betonwandung des Turmabschnitts hat insbesondere den Vorteil, dass die Spannglieder jederzeit zugänglich sind, um inspiziert, nachgespannt oder ausgetauscht zu werden. Beim Rückbau eines Turmes können die Spannglieder ausgebaut werden, so dass lediglich ein übliches Betonbauwerk übrig bleibt, das auf bekannte Weise zerlegbar ist.

Die Fertigung der Turmwandung kann wesentlich schneller und kostengünstiger erfolgen, da in der Schalung zum Bau der Betonwandung keine Spannkanäle mehr eingebaut und justiert werden müssen. Weiterhin ist es möglich, die Spannglieder bei Bedarf nachzuspannen, beispielsweise wenn durch Umbauten auf der Turmspitze größere Biegemomente auf den Betonturmabschnitt eingeleitet werden, als ursprünglich vorgesehen. Damit ist das erfindungsgemäße Turmbauwerk besonders für Windkraftanlagen geeignet; falls bei einer späteren Umrüstung, z. B. Verlängerung mit einem Stahlmast und/oder Anordnung eines Generators und Rotors mit höherer Masse, eine höhere Biegebeanspruchung des Betonturmabschnittes auftreten sollte, so ist es möglich, die Vorspannung soweit zu erhöhen, dass gewährleistet bleibt, dass eine Belastung der Betonturmwandung in allen Betriebssituationen im Druckbereich erfolgt und somit Risse im Beton vermieden werden. Die Spannglieder können zur Anpassung an die Verkehrslasten am Turmbauwerk auch nachträglich ausgetauscht werden und z. B. auch durch größere Spannglieder ersetzt werden.

Weitere vorteilhafte Ausgestaltungen der Erfindung sind den Unteransprüchen und dem nachfolgend mit Bezug auf die Zeichnung erläuterten Ausführungsbeispiel zu entnehmen.

Die Figuren zeigen im einzelnen:
- Fig. 1: Ansicht eines Turmbauwerks eines erfindungsgemäßen Windkraftwerks; in Schnittansicht;
- Fig. 2: die Verankerung der Spannglieder im Bereich der Turmkrone im Detail;
- Fig. 3a,b: die Befestigung der Spannglieder an der Turmwandung im Detail;
- Fig. 4: die Verankerung der Spannglieder im Fundament im Detail; und
- Fig. 5: eine Windkraftanlage mit einem erfindungsgemäßen Turmbauwerk in Vorderansicht.

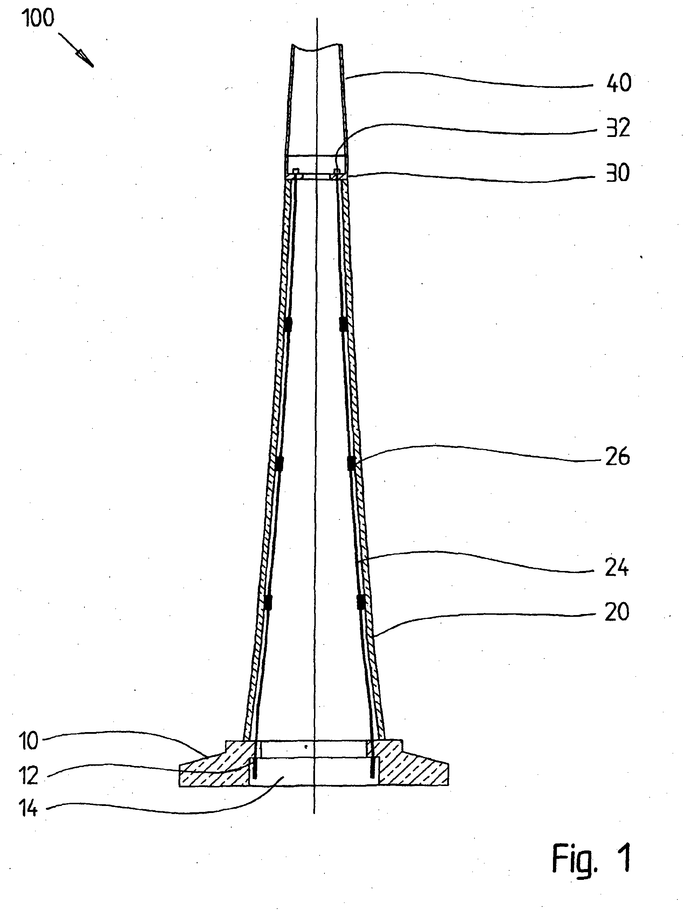

In Figur 1 ist ein Turmbauwerk 100 dargestellt. Auf einem Fundament 10 aus Stahlbeton ist eine gleichfalls aus Beton bestehende Turmwandung 20 errichtet, die einen ringförmigen Querschnitt hat, also einen geschlossenen Querschnitt, der insbesondere kreisförmig, ellipsoid oder auch polygonal sein kann. Auf die Turmwandung 20 ist eine Turmkrone 30 aufgesetzt, die aus Beton oder aus Stahl gebildet sein kann. Die Turmkrone 30 kann auch als Adaptersegment dienen, an dem ein zusätzlicher Stahlmast 40 befestigbar ist. Weiterhin kann die Turmkrone als Stahlmast ausgebildet sein.

Die ringförmige Turmwandung 20 umschließt einen innenliegenden Hohlraum 22, in dem beispielsweise Treppenaufgänge oder Lasten- bzw. Personenaufzüge angeordnet sein können.

An der Turmkrone 30 sind über deren Umfang verteilt eine Vielzahl von Kopflagerelementen 32 angeordnet, in denen die Spannglieder 24 verankert sind. Die Spannglieder 24 erstrecken sich von dem Kopflagerelement 32 an der Turmkrone 30 entlang der Innenseite der Turmwandung 20 bis in einen sogenannten Spannkeller 14 im Fundament 10. Hier sind eine Vielzahl von Fußlagerelementen 12 angeordnet.

Das Einziehen der Spannglieder 24 bei dem erfindungsgemäßen Turmbauwerk 100 ist einfach, da die Spannglieder 24 in dem Hohlraum 22 stets zugänglich sind. Die Spannglieder 24 können direkt von einer auf die Höhe der Turmkrone 30 gehobenen Rolle in eine Durchgangsbohrung am Kopflagerelement 32, einem Festanker, eingeführt und dann abgespult werden, bis sie eine Durchgangsbohrung an dem Fußlagerelement 12, einem Spannanker, erreichen.

Ebenso ist es möglich, die Spannglieder 24 zuerst in das Fußlagerelement 12 einzusetzen und dann mit Hilfe eines Hilfsseils zur Turmkrone 30 hochzuziehen. Auch in diesem Fall erleichtert die freie Zugänglichkeit der Spannglieder 24 die Montage wesentlich.

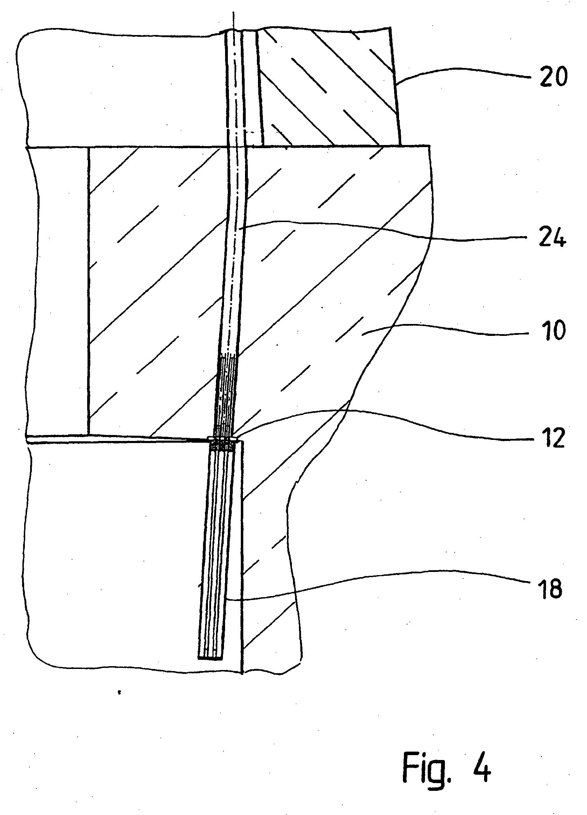

Die Spannglieder 24 werden an den Fußlagerelementen 12 mit Hilfe von Spannpressen gegriffen und auf eine bestimmte Spannung gebracht. Mit den Spanngliedern 24 wird so, wie an sich bekannt, die zwischen Fundament 10 und Turmkrone 30 angeordnete Turmwandung 20 aus Beton mit einer Druckspannung beaufschlagt. Abschließend werden die Spannglieder 24 in der vorgespannten Stellung im Fußlagerelement 12, dem Spannanker, verkeilt. Auf die aus dem Fußlager 12 herausragenden Enden wird, wie insbesondere Figur 4 zeigt, ein Hüllrohr 18 gestülpt. Dieses ist entfernbar und erlaubt das spätere a-bermalige Ansetzen einer Spannpresse zur Veränderung der Vorspannung der Spannglieder 24.

Die Spannung kann auch an der Turmkrone aufgebracht werden, wenn die Festanker am Fundament 10 und die Spannanker an der Turmkrone 30 angeordnet sind.

Um Schwingungen der unter Spannung stehenden, langen Spannglieder 24 entgegenzuwirken, können diese über ein oder mehrere Befestigungselemente 26 an der Turmwandung 20 befestigt sein. Die Befestigungselemente 26 erlauben eine axiale Verschiebbarkeit des befestigten Spannglieds 24.

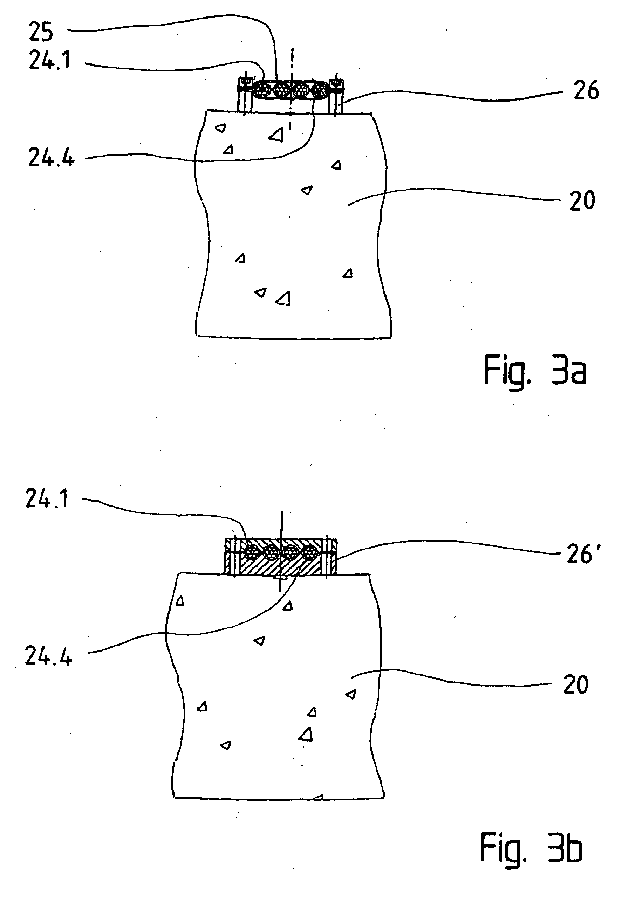

In Fig. 3a und 3b ist jeweils ein Spannglied 24 dargestellt, das sich aus mehreren Spannkabeln 24.1...24.4 zusammensetzt und vorzugsweise werkmäßig vorgefertigt ist. Die Spannkabel 24.1...24.4 bestehen jeweils aus geschlagenen Litzen und sind mit einer Spannkabelhülle vor Korrosion geschützt. Außerdem ist die Spannkabelhülle noch mit Korrosionsschutzfett verpresst, so dass die Litzen fettumhüllt sind. Insgesamt ergibt sich so ein dauerhafter Korrosionsschutz.

Die Spannglieder 24 setzen sich in den in den Figuren 3a und 3b dargestellten Ausführungsbeispielen aus je vier Spannkabeln 24.1...24.4 zusammen, die in einer Linie nebeneinander angeordnet sind. Die Spannkabel können aber wenigstens teilweise auch übereinander angeordnet sein. Je nach Belastung können die Spannkabel für sich kleinere oder größere Querschnitte haben. Außerdem kann die Belastbarkeit des Spanngliedes 24 über die Zahl seiner zusammengefassten Spankabel verändert werden.

Bei der Ausführungsform gemäß Figur 3a sind die Spannkabel 24.1...24.4 von einer zusätzlichen Spanngliedhülle 25 umgeben und über diese mit einem Befestigungselement 26 an der Turmwandung 20 verbunden.

Bei der Ausführungsform gemäß Figur 3a ist ein kammartiges Befestigungselement 26' vorgesehen, über das die Spannkabel 24.1...24.4 einzeln eingeklemmt und an der Turmwandung 20 befestigt sind. Bei diesem Befestigungselement 26' ergibt sich der Vorteil, dass die Spannkabel 24.1...24.4 auf Distanz voneinander gehalten werden und Schwingungen der Spannkabel in einer Richtung parallel zum Innenumfang der Turmwandung 20 unterbunden werden.

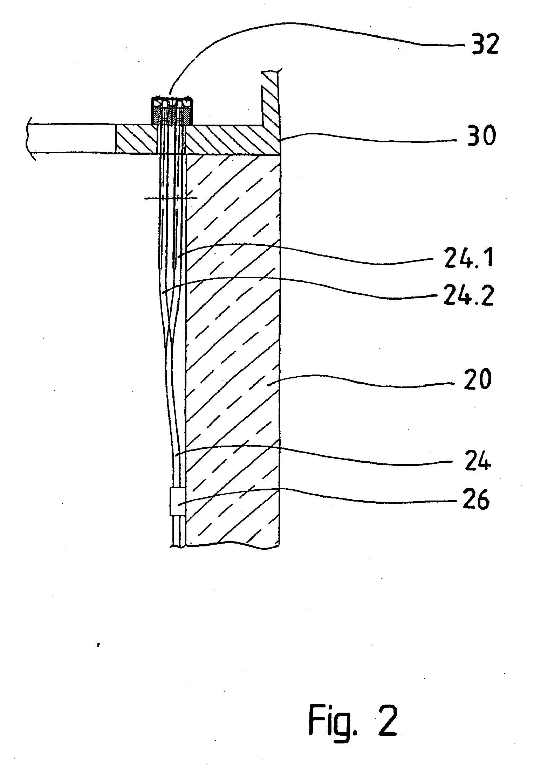

Fig. 2 zeigt die Verankerung der Spannglieder 24 an der Turmkrone 30. Bevorzugt sind die Spannglieder 24 im Bereich der Turmkrone 30 in ihre einzelnen Spannkabel 24.1, 24.2 aufgefächert. Die Spannkabel 24.1, 24.2 laufen einzeln durch Durchgangsbohrungen in der Turmkrone 30 und sind jeweils in einem Kopflagerelement 32 verankert.

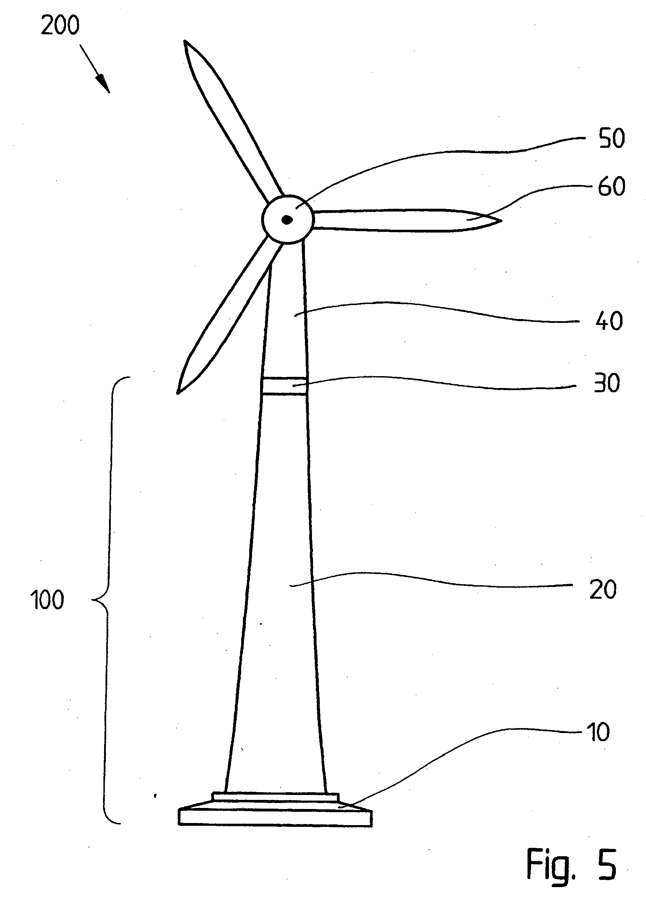

Das beschriebene Turmbauwerk 100 eignet sich insbesondere zum Bau von großen Windkraftanlagen, wie in Figur 5 gezeigt. Windkraftanlagen mit Türmen großer Höhe werden üblicherweise taktweise mit Hilfe von Kletter- oder Gleitschalungen errichtet. Durch die Anordnung der Spannglieder 24 im Hohlraum 22 im Inneren der Turmwandung 20 ist eine einfache Fertigung des Turmbauwerks 100 möglich, da gemäß der Erfindung keine Spannkanäle mehr in die Turmwandung 20 eingearbeitet werden müssen.

Die in Figur 5 dargestellte Windkraftanlage 200 besteht im wesentlichen aus einem beschriebenen Turmbauwerk 100 mit einer Höhe von etwa 70m über Grund und einem Außendurchmesser der Turmwandung 20, der sich ausgehend von ca. 12m am Fundament 10 bis auf 4,40 m im Bereich der Turmkrone verjüngt. Beschriebene ausgebildete Turmbauwerke aus Spanbeton mit anderen Abmessungen sind entsprechend der Nutzung und statisch-dynamischer Berechnung möglich.

Das Turmbauwerk 100 ist durch einen auf die Turmkrone 30 aufgesetzten Stahlmast 40 verlängert, auf dem wiederum eine Gondel mit Generator 50 und Rotor 60 aufgesetzt ist. Die Turmkrone 30 stellt als Adapterelement das Verbindungselement zwischen dem vorgespannten Stahlbetonturm 100 und dem Generator bzw. dem aufgesetzten Stahlmast 40 dar. Bei Anordnung eines aufgesetzten Stahlmastes kann bei entsprechender Fußausbildung dieser die Funktion der Turmkrone übernehmen bzw. die Turmkrone in Form eines Stahlmasts ausgebildet sein.

## Patentansprüche

1. Windkraftanlage (200), wenigstens bestehend aus einem Turmbauwerk (100) aus Spannbeton mit
- einem Fundament (10)
- wenigstens einer auf dem Fundament (10) errichteten Turmwandung (20) mit ringförmigem Querschnitt und einem davon umfassten, innenliegenden Hohlraum (22)
- und einer auf die Turmwandung (20) aufgesetzten Turmkrone (30),
und aus einem auf der Turmkrone (30) angeordneten Generator (50) mit einem Rotor (60),
wobei
- sich zwischen dem Fundament (10) und der Turmkrone (30) wenigstens drei Spannglieder (24) erstrecken, die außerhalb der Turmwandung (20) durch den Hohlraum (22) geführt sind und durch die die Turmwandung (20) mit einer Vorspannung beaufschlagbar ist,
- die Spannglieder (24) an einem Kopflagerelement (32) in der Turmkrone (30) verankert sind und an einem Fußlagerelement (12) im Fundament (10) spannbar angeordnet sind oder dass die Spannglieder (24) an einem Fußlager (12) im Fundament (10) verankert sind und an einem Kopflagerelement (32) in der Turmkrone (30) spannbar angeordnet sind,
- die Spannglieder (24) aus wenigstens einem Spannkabel (24.1...24.4) gebildet sind, welches aus einer Anordnung aus Stahllitzen besteht, die von einer Mantelhülle umgeben ist, wobei die Zwischenräume zwischen den Stahllitzen und/oder zwischen den Stahllitzen und der Mantelhülle mit einer Fettpackung verpresst sind, und mit wenigstens einem Befestigungselement (26) an der Turmwandung (20) befestigt sind, und
- die Turmkrone (30) als Adapterelement das Verbindungselement zwischen dem vorgespannten Turmbauwerk (100) aus Stahlbeton und dem Generator bzw. dem aufgesetzten Stahlmast (40) darstellt oder die Turmkrone (30) als Stahlmast ausgebildet ist.

## Claims

1. A wind power plant (200), at least consisting of a tower construction (100) made from prestressed concrete, having
- a foundation (10),
- at least one tower wall (20) erected on the foundation (10) and having an annular cross-section and an internal cavity (22) enclosed thereby,
- and a tower cap (30) placed on the tower wall (20),
and of a generator (50) disposed on the tower cap (30) and having a rotor (60),
- at least three prestressing elements (24) extending between the foundation (10) and the tower cap (30) and being guided outside the tower wall (20) through the cavity (22) and being adapted to subject the tower wall (20) to a prestress,
- the prestressing elements (24) being anchored to a head bearing element (32) in the tower cap (30) and being disposed in a tensible manner at a foot bearing element (12) in the foundation (10) or that the prestressing elements (24) are anchored to a foot bearing (12) in the foundation (10) and are disposed in a tensible manner at a head bearing element (32) in the tower cap (30),
- the prestressing elements (24) being formed from at least one prestressing cable (24.1 ... 24.4) which consists of an arrangement of steel strands which is surrounded by a casing sheath, the intermediate spaces between the steel strands and/or between the steel strands and the casing sheath being grouted with a grease packing, and being attached to the tower wall (20) with at least one attachment element (26), and
- the tower cap (30), as an adapter element, constituting the connecting element between the prestressed tower construction (100) made from prestressed concrete and the generator and/or the steel mast (40) placed thereon, or the tower cap (30) being formed as a steel mast.

## Revendications

1. Eolienne (200), composée au moins d'une construction en tour (100) en béton précontraint, comprenant
- une fondation (10)
- au moins une paroi de tour (20) érigée sur la fondation (10) qui présente une section transversale annulaire et une cavité interne (22) entourée par cette paroi,
- et une couronne de tour (30) montée sur la paroi de tour (20),
et d'un générateur (50) qui est agencé sur la couronne de tour (30) et est pourvu d'un rotor (60),
- au moins trois membres de précontrainte (24) s'étendant entre la fondation (10) et la couronne de tour (30), lesquels sont guidés à travers la cavité (22) à l'extérieur de la paroi de tour (20) et permettent d'appliquer une précontrainte sur la paroi de tour (20),
- les membres de précontrainte (24) étant ancrés sur un élément de crapaudine supérieure (32) dans la couronne de tour (30) et étant agencés au niveau d'un élément de crapaudine inférieure (12) dans la fondation (10) de manière à pouvoir être tendus, ou les membres de précontrainte (24) étant ancrés sur une crapaudine inférieure (12) dans la fondation (10) et étant agencés au niveau d'un élément de crapaudine supérieure (32) dans la couronne de tour (30) de manière à pouvoir être tendus,
- les membres de précontrainte (24) étant réalisés à partir d'au moins un câble de précontrainte (24.1 ... 24.4) constitué d'un agencement de torons d'acier entouré d'une enveloppe de gainage, les espaces intermédiaires entre les torons d'acier et/ou entre les torons d'acier et l'enveloppe de gainage étant emboués d'un bourrage graisseux, et étant fixés par au moins un élément de fixation (26) à la paroi de tour (20), et
- la couronne de tour (30) constituant en tant qu'élément adaptateur l'élément de raccordement entre la construction en tour (100) précontrainte en béton précontraint et le générateur ou le mât en acier (40) monté dessus, ou la couronne de tour (30) étant réalisés sous forme de mât en acier.
